# EUROPEAN PATENT APPLICATION

(11) **EP 4 746 164 A1**
(43) Date of publication of application: **20.05.2026**
(21) Application number: 24901743.5
(22) Date of filing: 06.09.2024
(51) Int. Cl.: H01M 50/342, H01M 50/383

(54) **BATTERY AND BATTERY PACK**

(30) Priority: 31.07.2024 CN 202421851665 U
(71) Applicant: Eve Power Co., Ltd., Jingmen, Hubei 448000 (CN)
(72) Inventor: SUN, Fei, Jingmen, Hubei 448000 (CN); YUAN, Dingding, Jingmen, Hubei 448000 (CN); HE, Wei, Jingmen, Hubei 448000 (CN)
(74) Representative: Berggren Oy
(86) International application number: PCT/CN2024/117455
(87) International publication number: WO 2026/025595

(57) **Abstract**

A battery and a battery pack are provided. The battery includes: a housing; and an explosion-proof valve, including a welding portion, the welding portion is welded to the housing, and the explosion-proof valve further includes a weakened portion. A buffer structure is arranged on the explosion-proof valve or the housing, the buffer structure is arranged close to the welding portion, and the buffer structure is configured to release the stress produced by the welding portion during welding.

## Description

The present application claims priority to Chinese Application No. 202421851665.9, filed on July 31, 2024, the content of which are incorporated herein by reference in its entirety.

### TECHNICAL FIELD

The present application relates to the field of battery technology, and in particular to a battery and a battery pack.

### BACKGROUND

An explosion-proof valve is arranged in a single cell of a power battery pack or an energy storage battery pack, which is crucial for the safety performance of the single cell. In the related technologies, the explosion-proof valve is usually welded to a housing, a welding seam between the explosion-proof valve and the housing is close to score lines of the explosion-proof valve, and the welding is usually carried out by high temperature laser.

### SUMMARY

An internal stress produced during post-welding cooling applies a tensile force to score lines of an explosion-proof valve, so that the uniformity of a thickness of the score lines of the explosion-proof valve is reduced, and thus the stability of an explosion value of the explosion-proof valve is reduced.

In a first aspect, embodiments of the present application provide a battery, including:
a housing; and
an explosion-proof valve, including a welding portion, in which the welding portion is welded to the housing, and the explosion-proof valve further includes a weakened portion;
in which, a buffer structure is arranged in the explosion-proof valve or the housing, the buffer structure is arranged close to the welding portion, and the buffer structure is configured to release a stress produced by the welding portion during welding.

In a second aspect, embodiments of the present application provide a battery pack, the battery pack includes a box body and multiple batteries arranged interior the box body, and the batteries are configured as batteries described above.

### BENEFICIAL EFFECTS

In a battery provided in the present application, a buffer structure is arranged in a housing or an explosion-proof valve, the buffer structure is arranged close to a welding portion, and the buffer structure is configured to release a stress produced by the welding portion during welding, so that the situation where the stress produced by the welding portion during post-welding cooling is transmitted to a weakened portion and a thickness of the weakened portion is reduced is alleviated.

A battery pack provided in the present application includes multiple batteries. The battery pack is designed based on the batteries described above. The beneficial effects of the battery pack refer to the beneficial effects of the batteries described above, which are not repeated here.

### BRIEF DESCRIPTION OF THE DRAWINGS

FIG. 1 is a three-dimensional schematic diagram of a structure of a battery provided in an embodiment of the present application;
FIG. 2 is a cross-sectional diagram of a structure obtained by welding an explosion-proof valve to a housing provided in a first embodiment of the present application;
FIG. 3 is a partially enlarged view of FIG. 2;
FIG. 4 is a partially cross-sectional diagram of a structure of an explosion-proof valve provided in a first embodiment of the present application;
FIG. 5 is a three-dimensional schematic diagram of a structure of an explosion-proof valve provided in a first embodiment of the present application from one view;
FIG. 6 is a three-dimensional schematic diagram of a structure of an explosion-proof valve provided in a first embodiment of the present application from another view;
FIG. 7 is a cross-sectional diagram of a structure obtained by welding an explosion-proof valve to a housing provided in a second embodiment of the present application;
FIG. 8a is a partially enlarged view of FIG. 7;
FIG. 8b is a partially enlarged view of FIG. 8a;
FIG. 9 is a partially cross-sectional diagram of a structure of an explosion-proof valve provided in a second embodiment of the present application;
FIG. 10 a three-dimensional schematic diagram of a structure of an explosion-proof valve provided in a second embodiment of the present application from one view;
FIG. 11 is a three-dimensional schematic diagram of a structure of an explosion-proof valve provided in a second embodiment of the present application from another view;
FIG. 12 is a cross-sectional diagram of a structure obtained by welding an explosion-proof valve to a housing provided in a third embodiment of the present application;
FIG. 13 is a partially enlarged view of FIG. 12;
FIG. 14 is a partially cross-sectional diagram of a structure of an explosion-proof valve provided in a third embodiment of the present application; and
FIG. 15 is a schematic diagram of a structure of a battery pack provided in an embodiment of the present application.

### Reference numerals in the drawings

100: battery; 1: housing; 11: second buffer groove; 2: explosion-proof valve; 21: welding portion; 211: outer surface of the welding portion; 22: weakened portion; 221: first score line; 222: second score line; 223: outer surface of the weakened portion; 224: inner surface of the second score line; 23: base body portion; 231: first base body portion; 2311: outer surface of the first base body portion; 2312: inner surface of the first base body portion; 232: second base body portion; 2321: outer surface of the second base body portion; 2322: inner surface of the second base body portion; 24: first buffer groove; 25: reinforcement portion; 26: buffer chamber; 27: arched portion; 3: buffer structure; 4: box body.

### DETAILED DESCRIPTION

In the present application, without an indication to the contrary, the use of locative words such as "on" and "under" usually refers to on or under of the actual use of the device or the working state, specifically for the graphic direction in the accompanying drawings. The terms "inside" and "outside" are for the contour of the device.

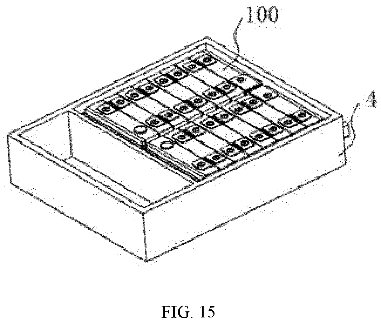

Embodiments of the present application provide a battery pack, and the battery pack is a power battery pack. The power battery pack is configured to store electric energy and serves as a power source for electric vehicles and hybrid vehicles. The battery pack is an energy storage battery pack. The energy storage battery pack includes an energy storage container for storing electrical energy to provide multiple functions for a power system, such as an intelligent mobile power grid. As shown in FIG. 15, the battery pack includes a box body, multiple single cells, and a battery management system (BMS).

The box body is configured to fix and protect multiple single cells and other components. The box body is assembled from several sub-box bodies. Materials suitable for preparing the box body are of good seismic, waterproof, and insulation properties. Suitable materials include metal or plastic materials. An inner chamber with a hollow structure is arranged in the box body. The inner chamber of the box body includes a battery chamber, and the battery chamber is configured to place multiple batteries.

Multiple single cells are arranged in a matrix form within the battery chamber. Multiple single cells are connected in series, or multiple single cells are connected in parallel, or multiple batteries are connected in a combination of series connection and parallel connection to ensure the capacity and power of the battery pack suitable for use by electrical equipment. Single cells include lithium-ion batteries, nickel-hydrogen batteries, lead-acid batteries, lithium iron phosphate batteries, or multi-component composite batteries.

BMS is configured to monitor, protect, and manage a working state of the battery pack. BMS monitors and balances a voltage and a temperature of each single cell, and controls the power and protection functions of the battery pack during charging and discharging.

The embodiments of the present application provide a battery 100, and the battery 100 is a cylindrical battery or a square battery. The single cell 100 includes a housing 1, an electrode assembly, and an electrolyte.

The housing 1 is configured to be made of metal materials with a mechanical strength and corrosion resistance. Suitable metal materials include nickel or steel. The housing 1 includes an inner chamber with a hollow structure, and the electrode assembly is accommodated in the inner chamber of the housing 1. The housing 1 is configured to fix and protect the electrode assembly.

The electrode assembly includes positive electrode plates, separators, and negative electrode plates. The separators are arranged between the positive electrode plates and the positive electrode plates and are configured to separate the positive electrode plates and the positive electrode plates. The electrode assembly is wound by winding the positive electrode plates, the separators, and the negative electrode plates to form a winding cell assembly. The electrode assembly is laminated by stacking the positive electrode plates, the separators, and the negative electrode plates to form a laminated assembly.

The electrolyte is filled into the housing 1, so that the internal structures of the battery such as the positive electrode plates and the negative electrode plates are fully immersed in the electrolyte. The electrolyte acts as an ion transport carrier between the positive electrode plates and the negative electrode plates to maintain a continuous transmission of electrons inside the battery, so that the battery is charged and discharged normally.

In related technologies, an explosion-proof valve is arranged in the single cell of the power battery pack or the energy storage battery pack, which is crucial for the safety performance of the single cell. The explosion-proof valve is usually welded to the housing. A welding seam between the explosion-proof valve and the housing is arranged close to a score line of the explosion-proof valve. The welding is usually carried out by high-temperature laser. Therefore, an internal stress produced during post-welding cooling applies a tensile force on the score line of the explosion-proof valve, which reduces the uniformity of a thickness of the score line of the explosion-proof valve, and thus reduces the stability of an explosion value of the explosion-proof valve.

In the battery provided in the embodiments of the present application, a buffer structure is arranged close to a welding position between the explosion-proof valve and the housing, and the buffer structure is configured to buffer the impact of the stress produced during cooling of a welding portion of the explosion-proof valve on a weakened portion of the explosion-proof valve.

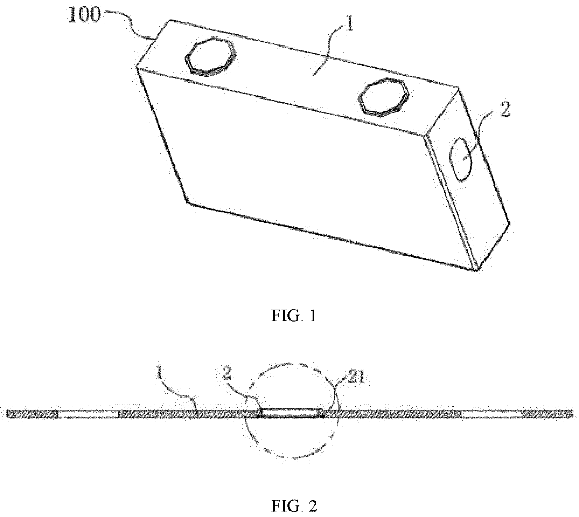

In some embodiments, as shown in FIG. 1 to FIG. 3 and FIG. 5, the battery 100 includes a housing 1, an explosion-proof valve 2, and a buffer structure 3.

In case that the battery 100 is configured to be a cylindrical battery, the housing 1 includes a top wall and a bottom wall arranged opposite to each other, and a side wall connected between the top wall and the bottom wall, and the explosion-proof valve is arranged on the top wall. In case that the battery is configured to be a square battery, the housing includes a top wall and a bottom wall arranged opposite to each other, and multiple side walls connected between the top wall and the bottom wall, and the explosion-proof valve 2 is arranged on the top wall, or the explosion-proof valve 2 is arranged on at least one of the side walls.

The explosion-proof valve 2 is welded to the housing 1. The explosion-proof valve 2 includes a welding portion 21 and a weakened portion 22. The welding portion 21 is located at a periphery of the explosion-proof valve 2, and the weakened portion 22 is located at an interior of the explosion-proof valve. When the explosion-proof valve 2 is welded to the housing 1, a laser energy received by an exterior of the explosion-proof valve 2 or an exterior of the housing 1 is large, and a melting area is large, and a laser energy received by an interior of the explosion-proof valve 2 or an interior of the housing 1 is small, and a melting area is small. Therefore, a cross-sectional area of the welding portion 21 gradually decreases in a direction extending from the exterior to the interior of the explosion-proof valve 2 or the housing 1, and the cross section of the welding portion 21 is configured in a shape of a triangle. The larger the melting area of a base material of the explosion-proof valve, the greater the tensile stress produced by shrinkage during cooling, so that the tensile stress on the exterior of the explosion-proof valve is greater than the tensile stress on the interior of the explosion-proof valve. In other alternative examples, the cross section of the welding portion is configured in a shape of a rectangle, a trapezoid or a parallelogram.

The buffer structure 3 is arranged close to the welding portion 21 of the explosion-proof valve 2. The buffer structure 3 is located on the housing 1, or the buffer structure 3 is located on the explosion-proof valve 2. The buffer structure 3 is arranged for the welding portion 21 to release the tensile stress produced during shrinkage, so that the influence of the welding portion 21 on a thickness of the weakened portion 22 during cooling and shrinkage is effectively alleviated.

In a first embodiment provided in the present application, as shown in FIG. 2 to FIG. 6, the buffer structure 3 includes a first buffer groove 24 arranged on the explosion-proof valve 2, and the first buffer groove 24 is arranged between the welding portion 21 and the weakened portion 22.

The first buffer groove 24 is formed on the explosion-proof valve 2, so that the welding portion 21 is disconnected from the weakened portion 22. The base material of the welding portion 21 melts and moves close to a side of the housing 1 during welding, so that during post-welding cooling of the welding portion 2, the internal stress produced by the welding portion 21 during cooling and shrinkage is prevented from being transmitted to the weakened portion 22 by the first buffer groove 24. Therefore, the influence of the stress produced by the welding portion 21 during post-welding cooling and shrinkage on the thickness of the weakened portion 22 is effectively alleviated.

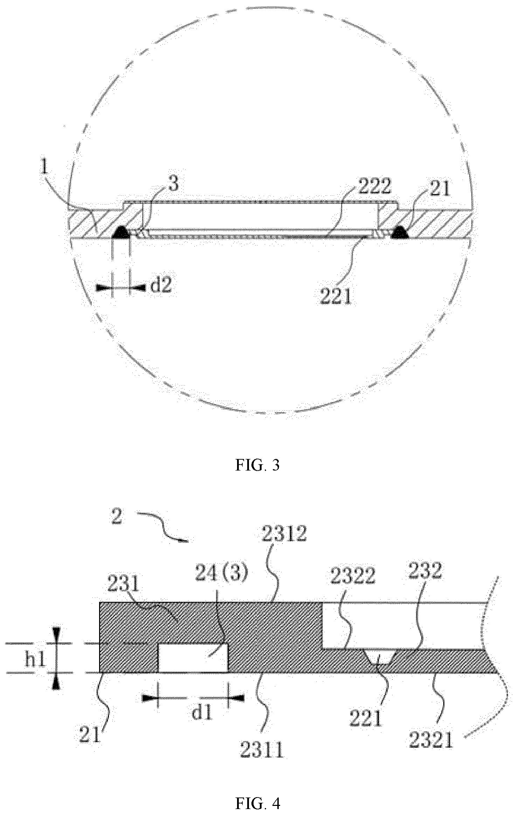

In some embodiments, continuing to refer to FIG. 3 to FIG. 6, the explosion-proof valve 2 includes a first base body portion 231 and the second base body portion 232 connected to each other, an outer surface 2311 of the first base body portion 231 is flush with an outer surface 2321 of the second base body portion 232, and an inner surface 2312 of the first base body portion 231 is arranged to protrude inward relative to an inner surface 2322 of the second base body portion 232, so that a thickness of the first base body portion 231 is greater than a thickness of the second base body portion 232.

The welding portion 21 and the first buffer groove 24 are both arranged on the first base body portion 231. The first buffer groove 24 extends from the outer surface 2311 of the first base body portion 231 to an interior of the first base body portion 231. The welding portion 21 is located on a side, facing away from the second base body portion 232, of the first base body portion 231.

The weakened portion 22 is arranged on the second base body portion 232, and the weakened portion 22 includes score lines. The score lines extend from the inner surface 2322 of the second base body portion 232 to an interior of the second base body portion 232.

The welding portion 21 and the first buffer groove 24 are both arranged on the first base body portion 231 with a large thickness, which is beneficial to maintain the overall structural strength of the explosion-proof valve 2. The weakened portion 22 is arranged on the second base body portion 232 with a small thickness, which is beneficial for the weakened portion 22 to break first once a pressure inside the battery 100 exceeds a preset high pressure threshold.

Further, the weakened portion 22 extends from the inner surface 2322 to the outer surface of the second base body portion 232, and the first buffer groove 24 extends from the outer surface 2311 to the inner surface of the first base body portion 231, so as to form a disconnected structure between the first buffer groove 24 and the weakened portion 22, and avoid the formation of a new weakened portion at a position where the first buffer groove 24 is located, thus reducing the uniformity of an opening pressure of the explosion-proof valve 2. Moreover, the heat from the welding portion 21 is concentrated on the outer surface 2311 of the first base body portion 231, so that the first buffer groove 24 is configured to extend from the outer surface 2311 to an interior of the first base body portion 231, and the welding portion 21 moves close to the housing 1 during welding and melting, which is beneficial to the stability of welding between the explosion-proof valve 2 and the housing 1.

In some embodiments, as shown in FIG. 4, a width d1 of the first buffer groove 24 is configured to be 0.1 mm ~ 3.0 mm. In specific implementations, the width d1 of the first buffer groove 24 is 0.1 mm, 0.5 mm, 0.8 mm, 1.0 mm, 1.2 mm, 1.6 mm, 1.9 mm, 2.0 mm, 2.3 mm, 2.5 mm, 2.6 mm, 2.8 mm, 3.0 mm, and a value between any two values or a range between any two values.

The inventor found through research that once the width d1 of the first buffer groove 24 is configured to be less than 0.1 mm, the width of the first buffer groove 24 is not large enough to form a disconnected structure between the first buffer groove 24 and the weakened portion 22. The stress produced by the welding portion 21 during cooling and shrinkage is still transmitted to the weakened portion 22 after passing through the first buffer groove 24. Once the width d1 of the first buffer groove 24 is configured to be greater than 3.0 mm, the overall size of the first base body portion 231 would increase, and the overall size of the explosion-proof valve 2 would increase, which results in waste of materials and increase in costs, and is adverse to arranged an explosion-proof valve structure described above on a narrow side wall or the top wall of the housing.

In some embodiments, a depth h1 of the first buffer groove 24 is configured to be greater than 0.1 mm, and a ratio of the depth h1 of the first buffer groove 24 to a height of the first base body portion 231 is not greater than 2/3.

The inventor found through research that once the depth h1 of the first buffer groove 24 is configured to be less than 0.1 mm, the depth of the first buffer groove 24 is not large enough to form a disconnected structure between the first buffer groove 24 and the weakened portion 22. The stress produced by the welding portion 21 during cooling and shrinkage is still transmitted to the weakened portion 22 through the first buffer groove 24. Once the ratio of the depth h1 of the first buffer groove 24 to the height of the first base body portion 231 is greater than 2/3, a thickness of the first base body portion 231 where the first buffer groove 24 is located is thin, which results in an insufficient strength of the first base body portion 231 and even affect the opening pressure of the explosion-proof valve 2.

In some embodiments, referring to FIG. 3, a width d2 of the welding portion 21 is configured to be 0.2 mm ~ 2 mm. In specific implementations, the width d2 of the welding portion 21 is 0.2 mm, 0.5 mm, 0.8 mm, 1.0 mm, 1.2 mm, 1.6 mm, 1.9 mm, 2.0 mm and a value between any two values or a range between any two values.

The inventor found through research that once the width d2 of the welding portion 21 is configured to be less than 0.2 mm, the processing becomes difficult and a stable welding is formed between the explosion-proof valve 2 and the housing 1. Once the width d2 of the welding portion 21 is configured to be greater than 2.0 mm, the welding portion 21 is not completely melted, which reduces the quality of welding between the explosion-proof valve 2 and the housing 1. The width d2 of the welding portion 21 is too approximate to the width d1 of the first buffer groove 24, so that the stress produced by the welding portion 21 during cooling is not fully buffered by the first buffer groove 24 and affects the weakened portion 22.

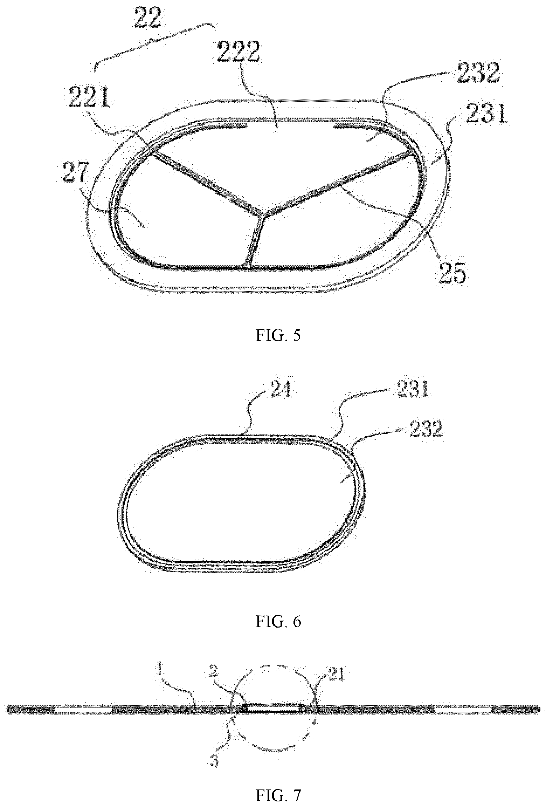

In a second embodiment provided in the present application, as shown in FIG. 7 to FIG. 11, the buffer structure 3 includes a second buffer groove 11 arranged on the housing 1, and the second buffer groove 11 is located on a side, away from the weakened portion 22, of the welding portion 21.

A second buffer groove 11 is arranged on the housing 1, and the second buffer groove 11 is arranged close to the welding portion 21. During welding and post-welding cooling of the base material of the welding portion 21, the second buffer groove 11 provides space for a deformation of the base material to release the stress produced during welding, rather than transmit the stress to the weakened portion 22 close to the welding portion 21. Therefore, the influence of the stress produced during post-welding cooling and shrinkage of the welding portion 21 on the thickness of the weakened portion 22 is effectively alleviated.

In some embodiments, continuing to refer to FIG. 7 to FIG. 11, the explosion-proof valve 2 includes a first base body portion 231 and a second base body portion 232 connected to each other. An outer surface 2311 of the first base body portion 231 is flush with an outer surface 2321 of the second base body portion 232, and an inner surface 2312 of the first base body portion 231 is arranged to protrude inward relative to an inner surface 2322 of the second base body portion 232, so that a thickness of the first base body portion 231 is greater than a thickness of the second base body portion 232.

The welding portion 21 is located on the first base body portion 231, and the heat at high temperature produced by the welding portion 21 during welding gradually decreases from the outer surface 2311 to an interior of the first base body portion 231.

The weakened portion 22 is arranged on the second base body portion 232, and the weakened portion 22 is configured in a structure of score lines. The weakened portion 22 extends from the inner surface 2322 of the second base body portion 232 to the interior of the second base body portion 232.

The second buffer groove 11 of the housing 1 is arranged close to the welding portion 21, and the second buffer groove and the weakened portion 22 are located on two sides of the welding portion 21. During welding of the welding portion 21, the second buffer groove 11 is configured for a deformation of the welding portion 21 to release a stress produced by the welding portion 21 during welding and post-welding cooling, thus the situation where the stress produced by the welding portion 21 during post-welding cooling is transmitted to the weakened portion 22 is effectively alleviated.

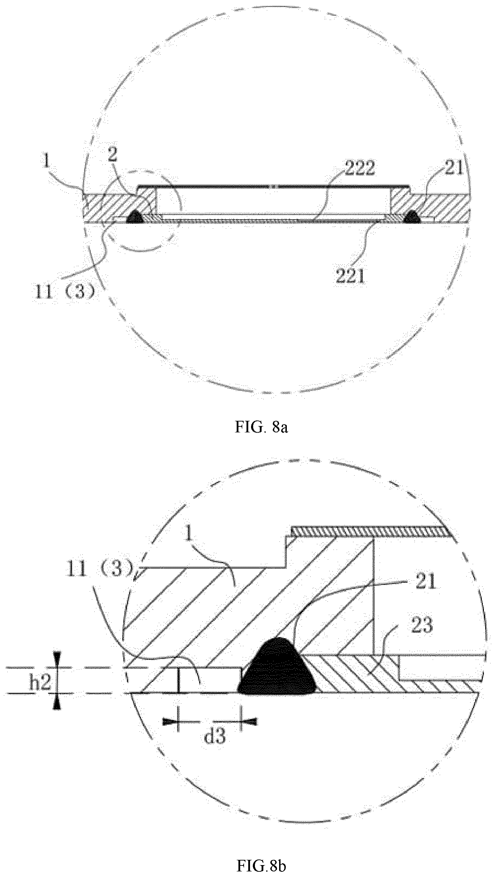

In some embodiments, as shown in FIG. 8b, a width d3 of the second buffer groove 11 is configured to be 0.1 mm ~ 3.0 mm. In specific implementations, the width d3 of the second buffer groove 11 is 0.1 mm, 0.5 mm, 0.8 mm, 1.0 mm, 1.2 mm, 1.6 mm, 1.9 mm, 2.0 mm, 2.3 mm, 2.5 mm, 2.6 mm, 2.8 mm, 3.0 mm and a value between any two values or a range between any two values.

The inventor found through research that once the width d3 of the second buffer groove 11 is configured to be less than 0.1 mm, the width of the second buffer groove 11 is not large enough to provide sufficient space for stress releasing, and the stress produced by the welding portion 21 during cooling and shrinkage is still transmitted to the weakened portion 22. Once the width d3 of the second buffer groove 11 is configured to be greater than 3.0 mm, the overall structural strength of the housing 1 would be reduced.

In some embodiments, continuing to refer to FIG. 4, a depth h2 of the second buffer groove 11 is configured to be greater than 0.1 mm, and a ratio of the depth h2 of the second buffer groove 11 to the thickness of the housing 1 is not greater than 2/3.

The inventor found through research that once the depth h2 of the second buffer groove 11 is configured to be less than 0.1 mm, the depth of the second buffer groove 11 is not large enough to provide sufficient space for stress releasing, and the stress produced by the welding portion 21 during cooling and shrinkage is still transmitted to the weakened portion 22. Once the ratio of the depth h2 of the second buffer groove 11 to the thickness of the housing 1 is greater than 2/3, the thickness of the housing 1 where the second buffer groove 11 is located would be thin, and the structural strength of the housing 1 would be reduced.

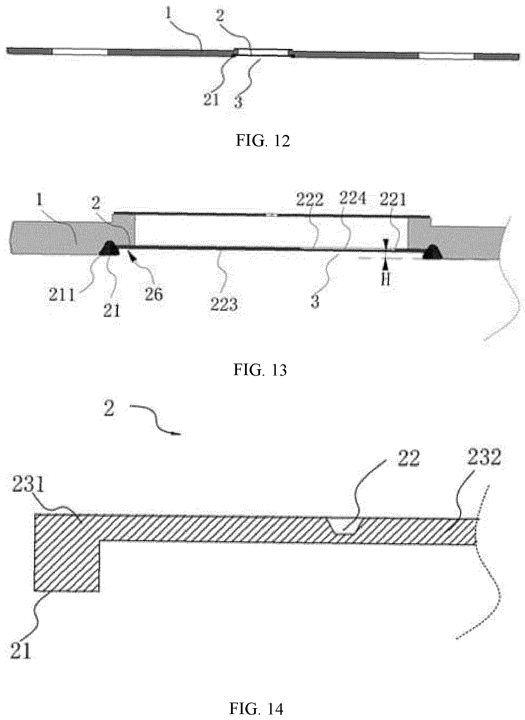

In a third embodiment provided in the present application, as shown in FIG. 12 to FIG. 14, the buffer structure 3 includes a buffer chamber 26, so that a height difference H is formed between the outer surface 211 of the welding portion 21 and the outer surface 223 of the weakened portion 22. The height difference H between the outer surface 211 of the welding portion 21 and the outer surface 223 of the weakened portion 22 is configured to be not less than 0.1 mm, and the height difference H between the outer surface 211 of the welding portion 21 and the outer surface 223 of the weakened portion 22 is configured to be not greater than 2 mm.

In some embodiments, the height difference H between the outer surface 211 of the welding portion 21 and the outer surface 223 of the weakened portion 22 is 0.1 mm, 0.2 mm, 0.5 mm, 0.8 mm, 1.0 mm, 1.2 mm, 1.6 mm, 1.9 mm, 2.0 mm and a value between any two values or a range between any two values.

Since the outer surface 223 of the weakened portion 22 is arranged to be offset from the outer surface 211 of the welding portion 21, a buffer chamber 26 is formed between the outer surface 223 of the weakened portion 22 and the outer surface 211 of the welding portion 21. The buffer chamber 26 is configured for stress releasing, and the stress produced by the welding portion 21 during welding and post-welding cooling is released in the buffer chamber 26, rather than be transmitted to the weakened portion 22.

The inventor found through research that once the height difference H between the outer surface 211 of the welding portion 21 and the outer surface 223 of the weakened portion 22 is configured to be less than 0.1 mm, a height of a stress releasing zone between the outer surface 223 of the weakened portion 22 and the outer surface 211 of the welding portion 21 is not large enough, so that the stress produced by the welding portion 21 during welding and post-welding cooling is still transmitted to the weakened portion 22.

Once the height difference H between the outer surface 211 of the welding portion 21 and the outer surface 223 of the weakened portion 22 is configured to be greater than 2 mm, the stress releasing zone would occupy more space in a thickness direction of the housing 1, and the structural strength of the housing 1 is reduced.

In some embodiments, continuing to refer to FIG. 14, the explosion-proof valve 2 includes a first base body portion 231 and a second base body portion 232 connected to each other. An inner surface 2312 of the first base body portion 231 is flush with an inner surface 2322 of the second base body portion 232. An outer surface 2311 of the first base body portion 231 is arranged to protrude inward relative to an outer surface 2321 of the second base body portion 232. The welding portion 21 is located on the first base body portion 231, the weakened portion 22 is located on the second base body portion 232, and the weakened portion 22 is arranged as a structure of score lines. The weakened portion 22 extends from the inner surface 2322 of the second matrix 232 to an interior of the second matrix 232.

The outer surface 2311 of the first base body portion 231 is arranged to protrude inward relative to the outer surface 2321 of the second base body portion 232, which is beneficial to form a height difference structure between the welding portion 21 and the weakened portion 22.

In an fourth embodiment provided in the present application, the buffer structure 3 includes a second buffer groove 11 structure arranged on the housing 1, as well as a height difference structure arranged between a plane where the welding portion 21 of the explosion-proof valve 2 is located and a plane where the weakened portion 22 of the explosion-proof valve is located, so that the second buffer groove 11 structure is formed on a left side of the welding portion 21, and a stress buffering zone is formed on a right side of the welding portion 21. The stress produced by the welding portion 21 during welding and post-welding cooling is fully released to the second buffer groove 11 on the left side and the stress buffering zone on the right side, thus the situation where the stress is transmitted to the weakened portion 22 is effectively avoided.

In the embodiments provided in the present application described above, since the plane where the weakened portion 22 of the explosion-proof valve 2 is located is arranged to be offset from the outer surface 211 of the welding portion 21, or the plane where the weakened portion 22 of the explosion-proof valve 2 is located is arranged to be disconnected from the outer surface of the welding portion 21, the stress produced by the welding portion 21 during welding and post-welding cooling is not transmitted to the weakened portion 22, thus maintaining the uniformity of the overall thickness of the weakened portion 22 and avoiding the influence of welding on the thickness of the weakened portion 22.

The plane where the weakened portion is located is offset from the outer surface of the welding portion, or the plane where the weakened portion is located is disconnected from the outer surface of the welding portion.

In some embodiments, referring to FIG. 5, FIG. 6, FIG. 9, and FIG. 10, the explosion-proof valve 2 includes a first base body portion 231 and a second base body portion 232 connected to each other, and the weakened portion 22 is located on the second base body portion 232. The weakened portion 22 includes a first score line 221 and a second score line 222. The second score line 222 is configured to extend from the inner surface 2322 to the outer surface of the second base body portion 232. The first score line 221 is arranged on the inner surface 224 of the second score line 222 and extends from the inner surface 224 of the second score line 222 to the outer surface 2321 of the second base body portion 232. The first score line 221 is configured in a shape of an unclosed ring. A gap is formed between two ends of the first score line 221, and the gap is configured as a part of the second score line 222. A thickness of the first score line 221 is smaller than a thickness of the second score line 222.

Once a pressure inside the battery 100 exceeds a preset threshold, the first score line 221 is broken first, and the second score line 222 maintains the connection between the first base body portion 231 and the second base body portion 232, thereby preventing the explosion-proof valve 2 from forming a large pressure relief opening. The electrolyte inside the battery 100 is ejected through the large pressure relief opening, which affects the safe use of the battery 100.

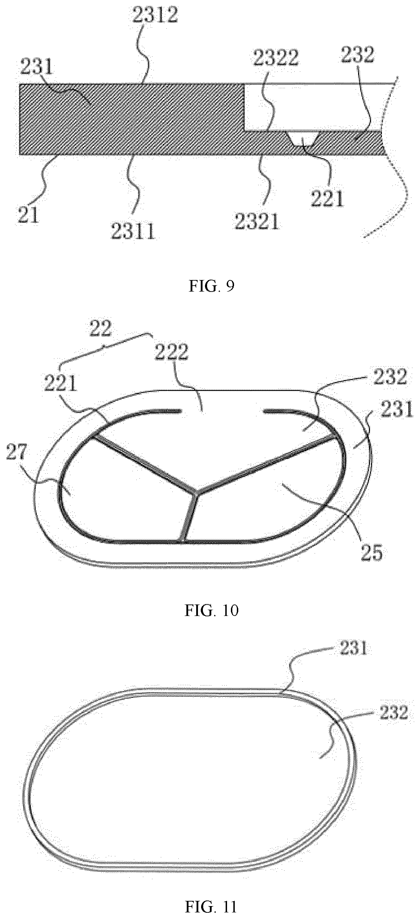

In some embodiments, as shown in FIG. 5 and FIG. 10, a reinforcement portion 25 is arranged on the second base body portion 232, a thickness of the reinforcement portion 25 is greater than the thickness of the first score line 221, and the reinforcement portion 25 includes three reinforcement sections. Head ends of the three reinforcement sections are all connected to a center of the second base body portion 232, and tail ends of the three reinforcement sections are connected to different positions of the first score line 221, thereby maintaining the overall structural strength of the explosion-proof valve 2.

In some embodiments, as shown in FIG. 5 and FIG. 10, the second base body portion 232 further includes an arched portion 27. The arched portion 27 is arranged between the first score line 221 and the reinforcement portion 25. The arched portion 27 is configured to arch upward in a direction from the outer surface 2321 to the inner surface of the second base body portion 232. An area between the reinforcement portion 25 and the first score line 221 is configured to arch upward, so that the stability of the overall structure of the second base body portion 232 of the explosion-proof valve 2 would be enhanced, and it is beneficial for the explosion of the explosion-proof valve 2.

## Claims

1. A battery (100), comprising:
a housing (1);
an explosion-proof valve (2), comprising a welding portion (21), the welding portion (21) being welded to the housing (1), and the explosion-proof valve (2) further comprising a weakened portion (22);
wherein a buffer structure (3) is arranged in the explosion-proof valve (2) or the housing (1), the buffer structure (3) is arranged close to the welding portion (21), and the buffer structure (3) is configured to release a stress produced by the welding portion (21) during welding.

2. The battery (100) of claim 1, wherein the buffer structure (3) comprises a first buffer groove (24) arranged on the explosion-proof valve (2), and the first buffer groove (24) is arranged between the welding portion (21) and the weakened portion (22).

3. The battery (100) of claim 2, wherein the explosion-proof valve (2) comprises a first base body portion (231) and a second base body portion (232) surrounded by the first base body portion (231), an outer surface (2311) of the first base body portion (231) is flush with an outer surface (2321) of the second base body portion (232), and an inner surface (2312) of the first base body portion (231) is arranged to protrude inward relative to an inner surface (2322) of the second base body portion (232); the first buffer groove (24) is arranged on the outer surface (2311) of the first base body portion (231), the weakened portion (22) comprises score lines, the score lines are arranged on the inner surface (2322) of the second base body portion (232), and an end, away from the second base body portion (232), of the first base body portion (231) is configured as the welding portion (21).

4. The battery (100) of claim 3, wherein a width of the first buffer groove (24) is configured to be not less than 0.1 mm and not greater than 3.0 mm, and/or a depth of the first buffer groove (24) is configured to be not less than 0.1 mm, and a ratio of the depth of the first buffer groove (24) to a height of the first base body portion (231) is not greater than 2/3; and/or a width of the welding portion (21) is configured to be not less than 0.2 mm and not greater than 2 mm.

5. The battery (100) of claim 1, wherein the buffer structure (3) comprises a second buffer groove (11) arranged on the housing (1), and the second buffer groove (11) is located on a side, away from the weakened portion (22), of the welding portion (21).

6. The battery (100) of claim 5, wherein a width of the second buffer groove (11) is configured to be not less than 0.1 mm and not less than 3.0 mm, and/or a depth of the second buffer groove (11) is configured to be greater than 0.1 mm, and/or a ratio of the depth of the second buffer groove (11) to a thickness of the housing (1) is not greater than 2/3.

7. The battery (100) of claim 1, wherein the buffer structure (3) comprises a buffer chamber (26) arranged in the explosion-proof valve (2), so that a height difference is formed between an outer surface (211) of the welding portion (21) and an outer surface (223) of the weakened portion (22), and the height difference is configured to be not less than 0.1 mm and not greater than 2 mm.

8. The battery (100) of claim 7, wherein the explosion-proof valve (2) comprises a first base body portion (231) and a second base body portion (232) surrounded by the first base body portion (231), an inner surface (2312) of the first base body portion (231) is flush with an inner surface (2322) of the second base body portion (232), and an outer surface (2311) of the first base body portion (231) is arranged to protrude inward relative to an outer surface (2321) of the second base body portion (232); the buffer chamber (26) is arranged at the outer surface (2321) of the second base body portion (232), the weakened portion (22) comprises score lines, the score lines are arranged at the inner surface (2322) of the second base body portion (232).

9. The battery (100) of claim 5, wherein the buffer structure (3) comprises a buffer chamber (26) arranged in the explosion-proof valve (2), so that a height difference is formed between an outer surface (211) of the welding portion (21) and an outer surface (223) of the weakened portion (22), and the height difference is configured to be not less than 0.1 mm and not greater than 2 mm.

10. The battery (100) of claim 1, wherein the explosion-proof valve (2) comprises a first base body portion (231) and a second base body portion (232) connected to each other, the weakened portion (22) comprises a first score line (221) and a second score line (222), the second score line (222) is arranged on an inner surface (2322) of the second base body portion (232), the first score line (221) is arranged on an inner surface (224) of the second score line (222), and the first score line (221) is configured in a shape of an unclosed ring.

11. The battery (100) of claim 10, wherein a reinforcement portion (25) is arranged on the second base body portion (232), a thickness of the reinforcement portion (25) is greater than a thickness of the second base body portion (232) where the first score line (221) is located.

12. The battery (100) of claim 11, wherein the second base body portion (232) further comprises an arched portion (27), the arched portion (27) is located between the first score line (221) and the reinforcement portion (25), the arched portion (27) is configured to arch upward in a direction from an outer surface (2321) to an inner surface of the second base body portion (232).

13. A battery pack, comprising a box body (4) and a plurality of batteries (100) arranged inside the box body (4), and the batteries being configured as batteries of any one of claims 1 to 12.
